(19) **Europäisches Patentamt / European Patent Office / Office européen des brevets**

(11) **EP 3 009 988 A1**

(12) **EUROPEAN PATENT APPLICATION**
published in accordance with Art. 153(4) EPC

(43) Date of publication:
**20.04.2016 Bulletin 2016/16**

(51) Int Cl.:
**G06T 17/05** $^{(2011.01)}$ **G06T 15/50** $^{(2006.01)}$
**G09B 29/00** $^{(2006.01)}$

(21) Application number: **14811411.9**

(22) Date of filing: **03.06.2014**

(86) International application number:
**PCT/JP2014/064661**

(87) International publication number:
**WO 2014/199859 (18.12.2014 Gazette 2014/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.06.2013 JP 2013122704**

(71) Applicant: **Geo Technical Laboratory Co., Ltd.
Fukuoka-shi, Fukuoka 812-0013 (JP)**

(72) Inventors:
 • **KISHIKAWA Kiyonari
   Fukuoka-shi
   Fukuoka 812-0013 (JP)**
 • **TESHIMA Eiji
   Fukuoka-shi
   Fukuoka 812-0013 (JP)**
 • **ARAMAKI Masatoshi
   Fukuoka-shi
   Fukuoka 812-0013 (JP)**

 • **ADA Masaya
   Fukuoka-shi
   Fukuoka 812-0013 (JP)**
 • **TOMITAKA Tsubasa
   Fukuoka-shi
   Fukuoka 812-0013 (JP)**
 • **KIMURA Tatsuji
   Fukuoka-shi
   Fukuoka 812-0013 (JP)**
 • **NAKAGAMI Masaru
   Fukuoka-shi
   Fukuoka 812-0013 (JP)**
 • **AZAKAMI Tatsuya
   Fukuoka-shi
   Fukuoka 812-0013 (JP)**
 • **FUKUSAKI Mai
   Fukuoka-shi
   Fukuoka 812-0013 (JP)**

(74) Representative: **Eder, Christian
   Eder Schieschke & Partner mbB
   Patentanwälte
   Elisabethstrasse 34/II
   80796 München (DE)**

(54) **3D MAP DISPLAY SYSTEM**

(57) [Problem] To make a 3D map appear more realistic with a comparatively low computational burden. [Solution] In this 3D-map-displaying navigation system, a perspective projection is performed on a 3D model to display a 3D image. When displaying same in a night-view mode, in addition to darkening the overall color scheme, white points representing light sources are displayed on buildings and roads. For buildings, a number of light sources corresponding to the height of the building are displayed linearly in the height direction. For roads, a number of light sources corresponding to the type of the road, i.e. two rows for freeways and one row for narrow streets, are laid out along the road. This makes it possible to make a 3D map appear more realistic without using a detailed 3D model including windows in buildings, roadside trees, and the like.

EP 3 009 988 A1

FIG.9

Example of Outputting Night View

WD

Region A

RD

**Description**

[Technical Field]

The present invention relates to a technology for displaying a 3D map on which features are represented three-dimensionally.

[Background Art]

3D maps on which features such as buildings, roads and the like are represented three-dimensionally have been popular. In this 3D map, features are represented in a state close to views visually recognized by a user in actuality. Thus, by using this 3D map for route guidance in a navigation system, the user can intuitively grasp the route, which is highly convenient.
In recent years, representation of a night view in the 3D map is also proposed. When a night view is represented, features and their backgrounds are drawn in dark colors. In a flight simulator or the like, for example, in order to have it felt more realistically, sophisticated 3D computer graphics are used by a 3D model to represent light leaking through a window of a building, a state in which the building is lighted up, light of streetlamps and the like.
Moreover, in the technology described in the following Patent Literature 1, a ratio of lighted windows, hues, brightness and the like are changed in accordance with a type of the building (residential building, office building, high rise building and the like) in a night-view mode by generating a window model for the window of each building.
Furthermore, in a technology described in the following Patent Literature 2, in a navigation device, when a map for night is to be drawn, if a map display scale is small, the gravity center or a top point of a building figure is drawn in high brightness color (light-spot figure).

[Citation List]

[Patent Literature]

[Patent Literature 1] Japanese Patent Laid-Open No. 2002-298162
[Patent Literature 21] Japanese Patent Laid-Open No. 2005-326154

[Summary of Invention]

[Technical Problems]

However, by simply drawing light in a building when a night view is represented as in the technology of Patent Literature 2, reality could not be improved. For example, since a degree of lighting of lights are naturally different between a house and a high rise building, even if lights are lighted similarly in the both for representing a night view, only the same degree of brightness can be represented for a residential street and a high-rise building street, and dazzling brightness specific to the high-rise building district could not be represented.
On the other hand, as in the technology described in Patent Literature 1, if a high-definition 3D model is used, the aforementioned problem can be solved, and a night view with high reality can be represented, but it results in another problem that a processing load for drawing becomes extremely high.
In this type of 3D map, an object to represent a landscape with high reality with a relatively light processing load is common in representation of a night view and in representation of a daytime view.
The present invention was made in order to solve the aforementioned problems and has an object to improve reality of a 3D map with a relatively light processing load.

[Solution to Problem]

In order to solve at least a part of the aforementioned problems, the present invention employs the following constitution.
An apparatus of the present invention is a 3D map display system for displaying a 3D map on which a feature is represented three-dimensionally, comprising:

a map database for storing, in an associated manner, drawing data including a 3D model of the feature and appearance attribute information representing an appearance attribute of the feature;

a projection view generation unit for generating a projection view made by projecting the drawing data; and

an attribute representation image superposing unit for displaying an attribute representation image on the projection view on the basis of the appearance attribute information, the attribute representation image being an image representing the appearance according to the appearance attribute information without depending on a shape of the feature superposed.

In the present invention, an appearance attribute of a feature is an attribute indicating a matter visually recognizable in a real world. The appearance attribute information includes a road width, a number of lanes and the like for a road, for example, and a height, a number of floors and the like for a building. Moreover, a type of roads such as an expressway, a general way, a minor street and the like, a type of buildings such as a building/a house, and moreover, a type of the feature itself such as a road/ building and the like can be considered to be information representing the appearance of the feature in a broad sense, and they can be included in the appearance attribute information.

The attribute representation image is an image representing an appearance according to the appearance attribute information without depending on a shape of the feature. For example, if the appearance attribute information such as a road width and a number of lanes is to be visually represented intuitively by arranging an image of an automobile on a road, the image of the automobile corresponds to the attribute representation image. The attribute representation image does not necessarily have to be an image of an actually existing object but an image of a light source when a night view is represented or the like, for example, is also included. Since symbols for guidance such as a map symbol symbolizing a feature, a so-called traffic icon, a business icon and the like do not reproduce the appearance of the feature, they are not included in the attribute representation image. Moreover, the attribute representation image is an image not depending on the shape of the feature and is different from a texture attached in accordance with the shape of the feature in texture mapping.

Such attribute representation image may be prepared in advance in association with the appearance attribute information or may be generated when a 3D map is to be displayed. Moreover, the both may be used separately in accordance with the appearance attribute information to be represented.

The attribute representation image may be displayed at a fixed position on a projection map or may be moved. A size and a color may be fixed or may be dynamically changed.

For generation of the projection view, various methods such as parallel projection and perspective projection can be used. The present invention is highly usable particularly for a projection view of a wide area and thus, generation of the projection view is preferably made by perspective projection from a viewpoint in the upper sky.

Moreover, the projection views do not necessarily have to project all the features. For example, if features become small to such a degree that the features cannot be sufficiently recognized on an attribute representation image in a wide area view, such features may be removed from projection targets and replaced by attribute representation images.

In order to improve reality of the 3D map, various decorations according to the appearance of a feature is preferably applied. According to the 3D map display system of the present invention, by using the attribute representation image generated separately from drawing data, such decorations on appearance can be applied. Moreover, since this attribute representation image is displayed on the basis of the appearance attribute information of the feature, unlike the image with the light source simply added as in Patent Literature 2, representation flexibly reflecting a characteristic of the appearance of the feature can be realized. Moreover, since the 3D model of the feature itself does not have to be made detail, an appearance attribute of a feature can be represented spuriously and simply. Therefore, reality of the 3D map can be improved with a relatively light processing load.

In the 3D map display system of the present invention,

the attribute representation image is an image representing an appearance without physical association with the feature; and

the attribute representation image superposing unit may display the attribute representation image by allowing protrusion from a shape of the feature.

The term "allowing" implies that an image not protruding from the shape of the feature is also included.

The attribute representation images include an image physically associated with the feature and an image which is not necessarily associated physically with the feature such as an image representing light of a building in a night view or an image representing sea spray of a coastline. In the aforementioned aspect, images representing the appearances without physical association are displayed without constraint that the image is contained in the shape of the feature. By configuring as such, representation not constrained by a profile shape of the 3D model can be made, whereby reality can be improved. For example, by displaying white points, lines and the like representing sea spray with respect to a polygon representing the sea at random and allowing protrusion from a boundary of the polygon around the coastline, even if the polygonal shape of the sea is relatively simple, a complicated coastline imitating the wave can be represented, whereby the reality thereof can be improved.

In the present invention,
the attribute representation image is a 2D image; and
the attribute representation image superposing unit may display the attribute representation image superposed on the projection view generated by the projection view generation unit.

In the aforementioned aspect, the attribute representation image is displayed simply by 2D image display processing separately from projection processing for generating a projection view. For example, the attribute representation image may be drawn directly on the projection view as the generated 2D image or maybe superposed/displayed on the projection view after the attribute representation image is drawn on a 2D layer. According to such aforementioned aspect, since projection processing is not needed for the attribute representation image, a processing load for display can be reduced.

In Such an aspect, a position where the attribute representation image is displayed can be determined by various methods. For example, it may be so configured that a 2D coordinate within the projection view after projection processing is obtained for each feature, and a display position of the attribute display image is determined by obtaining on the basis of this coordinate value. Alternatively, after the display position of the attribute display image is acquired within a 3D space on the basis of the 3D model of each feature, the coordinate within the 2D image may be acquired by applying coordinate conversion similar to the projection processing.

Moreover, if the projection view is to be generated by perspective projection from a view point in the upper sky, display may be made such that the higher in the projection view the display position is located, the smaller the size of the attribute representation image is displayed. In the case of the perspective projection, since the view point is drawn from the farther in the upper part in the generated image, perspective can be given also to the attribute representation image by making the size of the attribute representation image smaller as it goes upper.

As a specific application example of the aspect illustrated above,
the feature is a building;
the appearance attribute information is information representing a light emission state at night of the building;
the attribute representation image is a light source image representing light emission at night of the building; and
the attribute representation image superposing unit may display the attribute representation image in accordance with the light emission state.

The appearance attribute information representing the light emission state at night of the building refers to information which can give an influence on the number, size, color, brightness, shape, arrangement and the like of the light source images, when the appearance at light emission, that is, when the night view is to be displayed with the light source image superposed on the building. Such appearance attribute information includes a type of the building, a height and the number of floors of the building, planar shape and size of the building and the like, for example.

According to the aforementioned aspect, by generating a light source image in accordance with such appearance attribute information, reality of the night view of the building can be improved. For example, the light source images can be used and represented in accordance with a state such that, if the type of the building is an office building, a light source image representing light of a fluorescent light leaking through a window is used, while in the case of a high-rise building, a light source image representing light of an aircraft warning light is used.

Moreover, in the aforementioned aspect representing the light emission state at night of the building,
the appearance attribute information includes information representing a height or a the number of floors of the building; and
the attribute representation image superposing unit may display the attribute representation image in the number or size according to the height or the number of floors of the building.

By configuring as above, the higher building or a building with more floors can be represented with light leaking from many windows.

The number of light source images may match the number of floors of the building such as one for a one-storied building and three for a three-storied building or may be changed in steps such as one for one to five-storied building and two for six to ten-storied building. It can be changed in a monotonic increase manner or in steps by various methods in accordance with the height or the number of floors of the building. Moreover, an upper limit value or a lower limit value may be set for the number of light source images.

If a plurality of light source images are to be displayed, they may be juxtaposed in a height direction of the building. Then, the height of the building can be visually represented more effectively. The light source images may be spaced away from each other, abut against each other or be overlapped with each other.

The light source image may be enlarged or have its shape changed so that the area changes in accordance with the height or the number of floors of the building. In this case, too, it may be monotonic increase or a change in steps.

In the present invention, the light source images may be displayed by being juxtaposed in a right-and-left direction further in accordance with the planar shape of the building.

In the 3D map display system of the present invention,
the attribute representation image is an image representing an appearance of an object physically associated with the feature; and

the attribute representation image superposing unit may display the attribute representation image under a constraint condition based on the shape of the feature.

The constraint condition based on the shape of the feature can be a condition that the image does not protrude from the polygon representing the feature, a condition that the image is on a boundary or within a predetermined distance range from the boundary and the like, for example.

Such attribute representation images include, for example, a streetlamp or a vehicle on a road, a ship on the sea, plants growing in a field or a mountain and the like. In the case of objects physically associated with the features as above, if they are displayed by ignoring the feature shape, it can be an image giving a sense of discomfort. In the aforementioned aspect, such attribute representation images are displayed under the constraint condition based on the shape of the feature, such sense of discomfort can be avoided.

If a constraint condition based on the shape of the feature is imposed,

the attribute representation image superposing unit may arrange a model for displaying the attribute representation image on the 3D model prior to generation of the projection view.

The attribute representation image is displayed by being superposed on the feature by being projected together with the 3D model of the feature.

As described above, according to the method of arranging the model for the attribute representation image on the 3D model, a positional relation with the 3D model can be regulated relatively easily, and there is a merit that the aforementioned constraint condition can be easily maintained. Moreover, since the projection processing is applied also to the model for the attribute representation image, there is a merit that perspective similar to the 3D model of the feature can be given to the attribute display image.

Even if such constraint condition is imposed, as described above, it is possible to employ a method of directly drawing the attribute representation image as a 2D image or of drawing in layers and superposing.

On the other hand, it is also possible to employ a method of arranging images on the 3D model of the feature and then, performing projection, including the attribute representation images to which the aforementioned constraint condition is not imposed.

Moreover, the model for displaying the attribute representation image may be three-dimensional or two-dimensional. If the 2D attribute representation image is used, such a method may be employed that a texture composed of the attribute representation image is generated by arranging all the attribute representation images displayed in the 3D map on one plane in accordance with a positional coordinate of the corresponding feature, and this is pasted to the 3D model and then, projected.

As a specific example of an aspect to which the aforementioned constraint condition is imposed,

the feature is a road;

the attribute representation image is a light source image representing light of a streetlamp arranged on the road; and

the attribute representation image superposing unit may display the light source image under a constraint condition that the image is along the road.

By configuring as above, the light of the streetlamp can be represented on the road, and reality of the night view of the road can be improved. The arrangement of the light source images can be set in various ways, but by regularly arranging them along the road, reality can be further improved.

The arrangement of the light source images may be changed in accordance with the number of lanes of the road and the like. For example, if the number of lanes of the road is small, they can be arranged in one row or if the number is large, they may be arranged in plural rows (two rows, for example). Moreover, a light source image representing a lighted state of a traffic signal may be arranged at a crossing of the road.

The present invention does not have to comprise all the aforementioned various characteristics but a part of them can be omitted or combined as appropriate in configuration. Moreover, the present invention can be configured as an invention of a 3D map display method other than the configuration as the aforementioned 3D map display system. Moreover, the present invention can be realized in various modes such as a computer program for realizing them and a recording medium recording the program, a data signal including the program and embodied in a carrier wave and the like. In each of the modes, it is possible to apply the various additional elements illustrated above.

When the present invention is configured as the computer program or the recording medium or the like recording the program, it may be configured as an entire program for controlling an operation of the 3D map display system or only a portion performing the function of the present invention may be configured. Moreover, as the recording medium, various computer-readable mediums such as a flexible disk, CD-ROM, DVD-ROM, a magneto-optical disk, an IC card, a ROM cartridge, a punch card, a printed matter on which a code such as barcode is printed, an internal storage device of a computer (a memory such as a RAM and a ROM), and an external storage device can be used.

[Brief Description of the Drawings]

[Fig. 1] Fig. 1 is an explanatory view illustrating an outline configuration of a navigation system in an embodiment.
[Fig. 2] Figs. 2 are explanatory views illustrating contents of map data 22.
[Fig. 3] Fig. 3 is an explanatory view illustrating an example of a setting table 24T and attribute representation image data 24.
[Fig. 4] Fig. 4 is a flowchart illustrating a flow of route guidance processing.
[Fig. 5] Fig. 5 is an explanatory view illustrating a display method of a 3D map of this embodiment.
[Fig. 6] Fig. 6 is a flowchart illustrating a flow of 3D map display processing.
[Fig. 7] Fig. 7 is a flowchart illustrating a flow of building attribute representation image drawing processing.
[Fig. 8] Fig. 8 is a flowchart illustrating a flow of road attribute representation image drawing processing.
[Fig. 9] Fig. 9 is an explanatory view illustrating a display example of a 3D map (bird-eye view) when a display mode is a night-view mode.
[Fig. 10] Figs. 10 are explanatory views illustrating a display example of a light source image of a variation.
[Fig. 11] Fig. 11 is a flowchart illustrating a flow of road attribute representation image drawing processing of a variation.
[Fig. 12] Fig. 12 is a flowchart illustrating a flow of attribute representation image drawing processing of the variation.
[Fig. 13] Fig. 13 is a flowchart illustrating a flow of the attribute representation image drawing processing of another variation.

[Mode for Carrying Out the Invention]

[Embodiment]

An embodiment of the present invention will be described on the basis of an embodiment when a 3D map display system of the present invention is applied to a navigation system for giving route guidance from a departure place (current place) to a destination place. In the following, an example of the navigation system is illustrated, but the present invention is not limited to such an example but can be configured as various devices for displaying a 3D map.

A. System configuration:

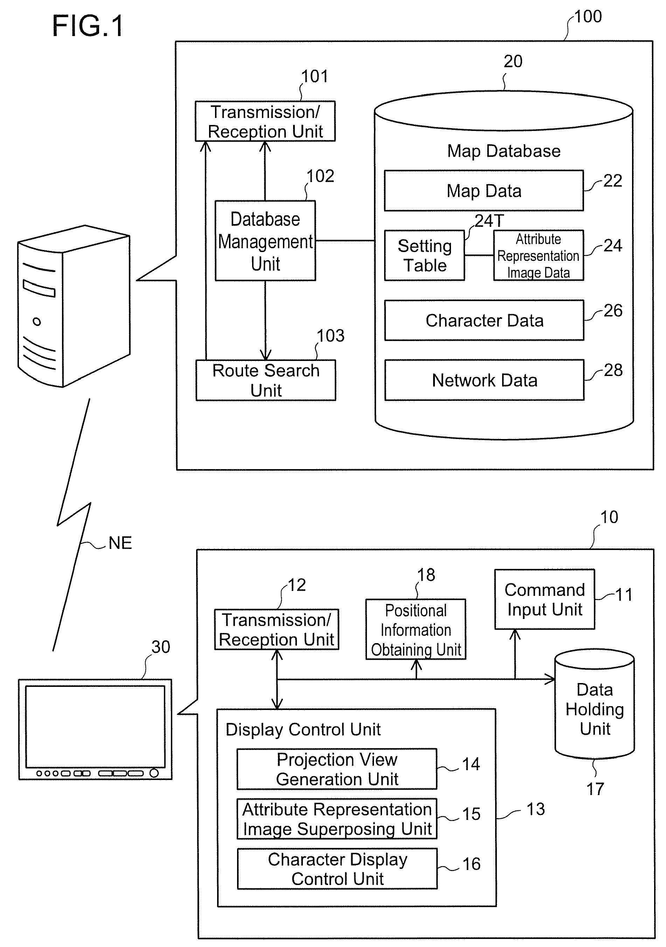

Fig. 1 is an explanatory view illustrating an outline configuration of a navigation system in the embodiment. The navigation system is configured by connecting a server 100 and a terminal 10 having a function as a 3D map display device via a network NE. In addition, it may be configured as a standalone device by incorporating a function provided by the server 100 of this embodiment in the terminal 10 or may be configured as a distributed system provided with many more servers and the like.
The server 100 is provided with functional blocks of a map database 20, a transmission/reception unit 101, a database management unit 102, and a route search unit 103, as illustrated. These functional blocks can be configured in a software manner by installing a computer program for realizing the respective functions in the server 100. At least a part of these functional blocks may be configured in a hardware manner.
In the map database 20, map data 22, a setting table 24T, attribute representation image data 24, character data 26, and network data 28 are stored.
The map data 22 is data for displaying a 3D map during route guidance and includes a 3D model (polygon) and the like as drawing data for three-dimensionally drawing various features such as sea, mountain, river, road, building and the like.
The setting table 24T regulates what attribute representation image is to be used to decorate an appearance of a feature. In this example, the attribute representation images include those prepared in the form of image data in advance and those generated on the basis of a function provided in a graphics library when drawing a map. The attribute representation image data 24 stores image data of the attribute representation image which should be prepared in advance.
Data structures of the map data 22, the setting table 24T, and the attribute representation image data 24 will be described later.
The character data 26 is data representing characters displayed in the map.
The network data 28 is data for route search representing roads as a collection of links and nodes.
Each functional block of the server 100 provides the following functions, respectively.
The transmission/reception unit 101 conducts transaction of various commands, data and the like with the terminal 10 via the network NE. In this embodiment, the commands relating to route search and map display, various types of data stored in the map database 20 and the like are transmitted/received, for example.

The database management unit 102 controls reading-out of the data from the map database 20.

The route search unit 103 executes route search from the departure place to the destination place specified by a user by using the map database 20. In the route search, a known method such as Dijkstra's algorithm or the like can be applied.

The terminal 10 comprises a CPU, a ROM, a RAM, a hard disk drive and the like. The CPU functions as a transmission/reception unit 12 and a display control unit 13 by reading out and executing an application program stored in the hard disk drive. The display control unit 13 comprises a projection view generation unit 14, an attribute representation image superposing unit 15, and a character display control unit 16. At least a part of these units may be configured by hardware.

A command input unit 11 receives an input of an instruction by a user relating to route search and map display.

The transmission/reception unit 12 transmits/receives various commands, data and the like with the server 100 via the network NE.

A data holding unit 17 temporarily holds data obtained from the server 100.

A positional information obtaining unit 18 obtains information required for route search and route guidance such as a current position and azimuth of the terminal 10 by a sensor such as a GPS (Global Positioning System) and an electromagnetic compass.

The projection view generation unit 14 generates a projection view obtained by three-dimensionally drawing a feature by a perspective projection method by using the map data 22. The attribute representation image superposing unit 15 has the attribute representation image superposed on the projection view displayed by using the attribute representation image data 24 and the like. The character display control unit 16 controls display of the character representing information relating to the feature on the projection view by using the character data 26. The display control unit 13 controls operations of the projection view generation unit 14, the attribute representation image superposing unit 15, and the character display control unit 16 and displays a 3D map generated by them on the display device 30 of the terminal 10.

In this embodiment, a "day-view mode" which is a display mode displaying a view of a day time and a "night-view mode" which is a display mode displaying a view of a night time are prepared as display modes of the 3D map.

B. Map data:

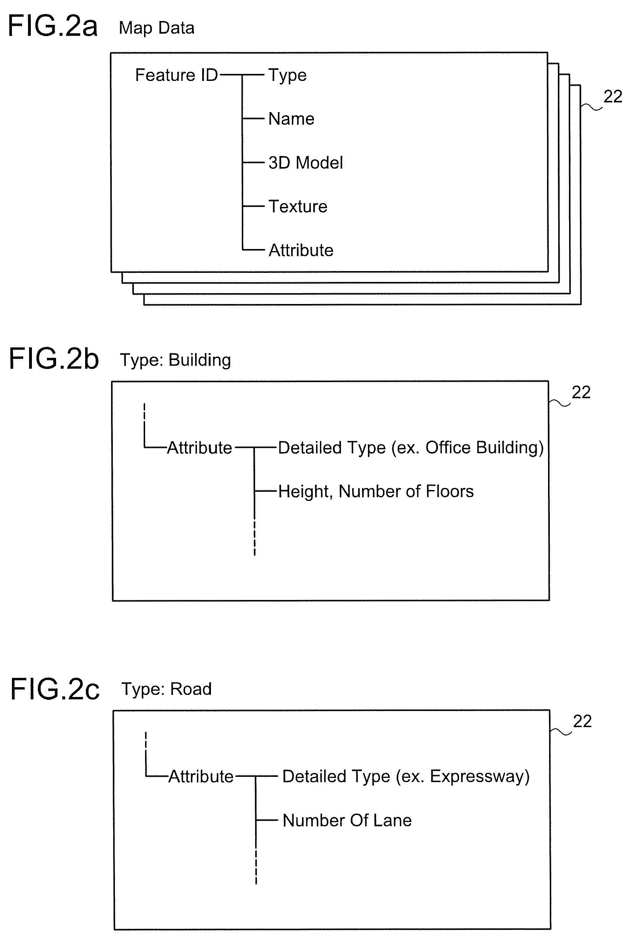

Figs. 2 are explanatory views illustrating contents of the map data 22. As illustrated in Fig. 2a, in the map data 22, a feature ID specific to each feature is given, and various types of data illustrated for each feature are managed.

A "type" indicates a type of features such as a "building", a "road", a "railway", the "sea", a "lake", a "river", a "mountains and forests", a "field/plain" and the like.

A "name" is a name of the feature.

A "3D model" is polygon data for displaying each feature three-dimensionally. This data corresponds to drawing data in the present invention.

A "texture" is an image pasted in accordance with a shape of a feature (3D model) in texture mapping.

An "attribute" is data indicating various natures of a feature in accordance with the type of the feature. As illustrated in Fig. 2b, if the type of the feature is a building, for example, detailed types of the building such as a high-rise building, an office building, a house and the like (detailed type), a height or a the number of floors of the building, a width of the building and the like are included in the attributes. Moreover, as illustrated in Fig. 2c, if the type of the feature is a road, detailed types of the road such as a highway, a national route, a prefectural route, a general road, a narrow street and the like (detailed type), a number of lanes of the road, a width of the road and the like are included in the attributes.

C. Attribute representation image:

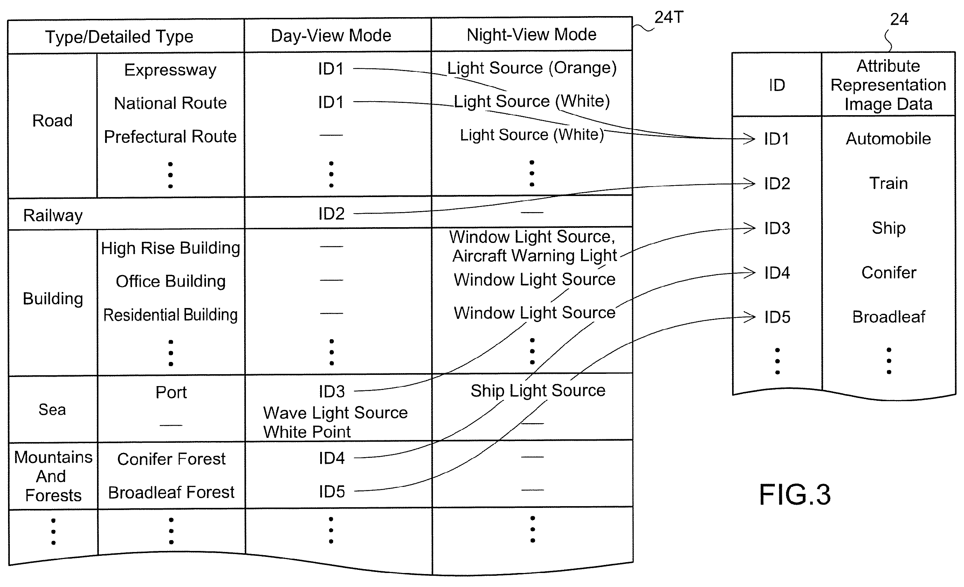

Fig. 3 is an explanatory view illustrating an example of the setting table 24T and the attribute representation image data 24. The setting table 24T regulates the attribute representation image used for decorating an appearance of a feature. In this embodiment, since the day-view mode and the night-view mode are provided as the map display modes, the attribute representation image is also set for each display mode. The attribute representation image data 24 is a database storing two-dimensional image data for displaying the attribute representation image in association with identification information ID.

In the setting table 24T, the attribute representation image is associated with the type/detailed type of the feature as illustrated.

In the day-view mode of the road/highway, an identification information ID1 is stored. This indicates that the identification information ID1 of the attribute representation image data 24, that is, image data of an automobile is used as the attribute representation image. On the other hand, in the night-view mode, a "light source (orange) is set. This indicates that, when a map is drawn by using the function of the graphics library, a spherical light source image representing orange-color light of a streetlamp (sodium-vapor lamp) installed on the road is generated and displayed. Similarly, for the national route, the identification information ID1 "automobile" is used similarly to the highway in the day-view mode, but in the night-view mode, a light source in a different color as a "light source (white)" is used. For the prefectural road, in the day-view mode, such setting is made that the attribute representation image is not used. By changing the setting in accordance with the type of the road as above, appearance of each type can be represented.

Similarly, those using the image data prepared in the attribute representation image data 24 include a railway identification information ID2 "train", a sea/port identification information ID3 "ship", a mountains and forests/conifer forest identification information ID4 "conifer forest" and mountains and forests/broadleaf forest identification information ID5 "broadleaf forest" and the like in the day-view mode, respectively.

On the other hand, those generated in drawing and used in the night-view mode include square and circular window light source images representing white light of a fluorescent light leaking through the window of a building, circular aircraft warning light images representing red light of an aircraft warning light installed on a rooftop of a high-rise building and the like, and a ship light source image lighted on a ship. Moreover, those used in the day-view mode include a wave light source image representing brightness of sea waves, white-point images representing sea spray and the like. The attribute representation images can be prepared for various features other than the above.

D. Route guidance processing:

By using processing when route search and route guidance are made by the navigation system of the embodiment as an example, display control of the 3D map in this embodiment will be described below.

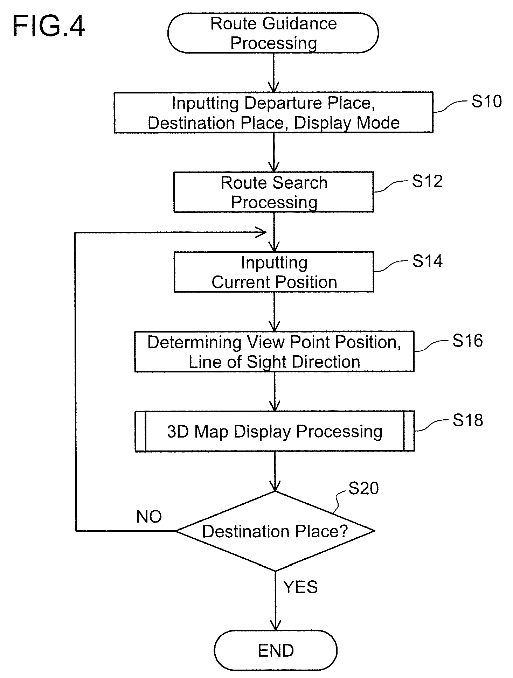

Fig. 4 is a flowchart illustrating a flow of the route guidance processing. Processing contents of the terminal 10 and the server 100 are not described separately, but this processing is executed by both in collaboration.

When the processing is started, the navigation system inputs instructions of a departure place, a destination place, and a display mode (Step S10). As the departure place, a current position obtained by the positional information obtaining unit 18 may be used as it is. As the display mode, the "day-view mode" which is a display mode displaying a view of the day time and the "night-view mode" which is a display mode displaying a view of the night time are prepared. The display mode may be automatically switched in accordance with time when the route guidance processing is executed by providing a function of obtaining the time in the navigation system.

Subsequently, the navigation system executes route search processing on the basis of specification from the user (Step S12). This processing is executed by the server 100 by using the network data 28 stored in the map database 20 and can be executed by a known method such as Dijkstra's algorithm or the like. The obtained route is transmitted to the terminal 10.

Upon receipt of a result of the route search, the terminal 10 executes the route guidance by the following procedure while performing 3D map display.

First, the terminal 10 inputs a current position from the sensor such as a GPS and the like (Step S14) and determines a view point position and a line of sight direction when the 3D map is displayed (Step S16). The line of sight direction can be a direction in which a future position is seen on the route from the current position to the destination place, for example. The view point position can be behind the current position only by a predetermined distance, for example, and a height and an angle (an elevation angle, a depression angle) of the view point can be adjusted arbitrarily by the user from a value set in advance.

Then, the terminal 10 executes 3D map display processing (Step S18). The 3D map display processing will be described later in detail.

The terminal 10 repeatedly executes the processing from Steps S14 to S18 until the destination place is reached (Step S20: YES).

E. 3D map display processing:

In this embodiment, by drawing various attribute representation images described in Fig. 3, the appearance of the feature is decorated and the 3D map is displayed. The display of the attribute representation image can be made in various ways but first, a method of superposing an attribute representation image layer on which the attribute representation image is drawn two-dimensionally on the projection view obtained by performing perspective projection of the 3D model will be described.

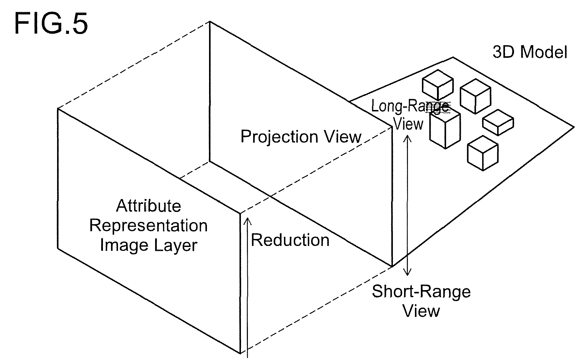

Fig. 5 is an explanatory view illustrating a display method of the 3D map of this embodiment. A relation among the 3D model, the projection view and the attribute representation image layer is schematically illustrated. The projection view is a two-dimensional image drawn by perspective projection of the 3D model. In the projection view by perspective projection, the 3D model in a short-range view is drawn larger on the lower region, and the 3D model in a long-range view is drawn smaller on the upper region, whereby perspective is represented.

The attribute representation image layer is a layer on which the attribute representation image is drawn two-dimensionally and is prepared separately from the projection view. Regarding a display position of each of the attribute representation images on the attribute representation image layer, a two-dimensional coordinate of each feature in the projection view is obtained and the display position of the attribute representation image can be determined on the basis of this coordinate value, for example. After the display position of the attribute display image is acquired in a three-dimensional space on the basis of the 3D model of each feature, the coordinate in the 2D image may be acquired by executing coordinate conversion similar to perspective projection. The attribute representation image layer is superposed on a front surface of the projection view.

In the attribute representation image layer, similarly to the feature in the projection view, the attribute representation image is reduced and drawn on the upper region. In this way, perspective can be given also to the attribute representation image.

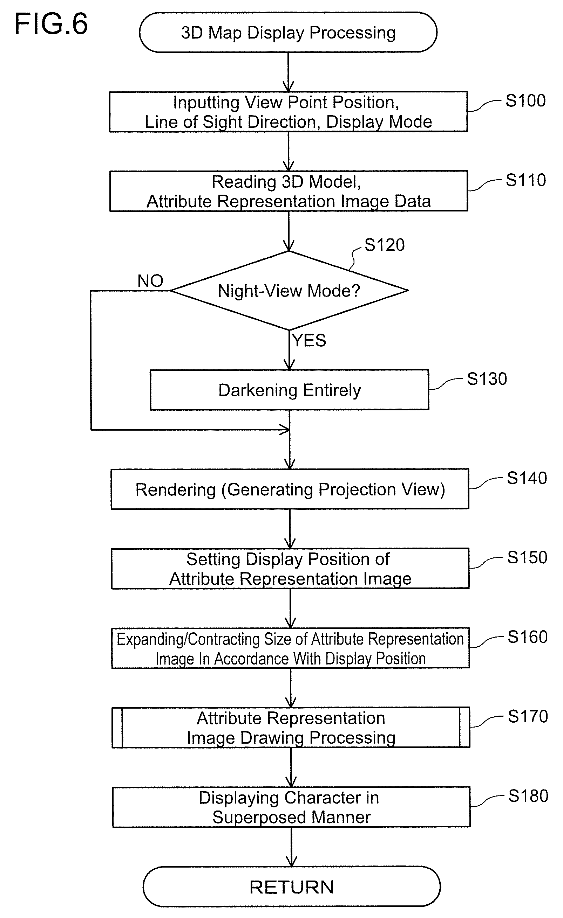

Fig. 6 is a flowchart illustrating a flow of the 3D map display processing. This processing corresponds to Step S18 in the route guidance processing illustrated in Fig. 4 and is the processing executed by the terminal 10.

When the processing is started, the terminal 10 inputs a view point position, a line of sight direction, and a display mode (Step S100). Then, the terminal 10 reads in a 3D model of a feature present in a display target area determined on the basis of the view point position and the line of sight direction and the attribute representation image data 24 corresponding to each feature from the map database 20 (Step S110).

Then, the terminal 10 determines whether the display mode of the 3D map is the day-view mode or the night-view mode (Step S120). If the display mode is the night-view mode, the terminal 10 darkens the 3D model and the entire background thereof (Step S130). On the other hand, if the display mode is the day-view mode, the terminal 10 skips Step S130 and proceeds with the processing to Step S140.

Then, the terminal 10 performs rendering by the perspective projection method while performing hidden line elimination on the basis of the view point position and the line of sight direction set at Step S100 generates a projection view drawing a feature three-dimensionally (Step S140).

Then, the terminal 10 obtains a two-dimensional coordinate value in the projection view for each feature and sets a display position of the attribute representation image in the attribute representation image layer on the basis of this coordinate value (Step S150). At this time, the terminal 10 generates an attribute representation image (see Fig. 3) corresponding to each feature and not stored in the map database 20 in accordance with the display mode by using the function of the graphics library and also sets the display position of this attribute representation image.

Then, the terminal 10 expands/contracts a size of the attribute representation image in accordance with the display position of each feature in the projection view (Step S160). Regarding the size of the attribute representation image, a reference size based on the feature displayed at a center in a vertical direction in the projection view is set in accordance with the map scale, and the lower the display position of the feature is located, the larger the terminal 10 enlarges the size of the attribute representation image, and the upper the display position of the feature is located, the smaller the terminal 10 reduces the size of the two-dimensional light source image.

Then, the terminal 10 executes attribute representation image drawing processing (Step S170). The attribute representation image drawing processing is processing of two-dimensionally drawing the attribute representation image on the attribute representation image layer. As illustrated in Fig. 3, there are various types of attribute representation images, but since the drawing method is different depending on the type, specific processing contents will be described later.

When the attribute representation image drawing processing is finished, the terminal 10 reads in character data which is a display target and displays each character superposed on the map (Step S180).

The terminal 10 finishes the 3D map display processing by the processing described above.

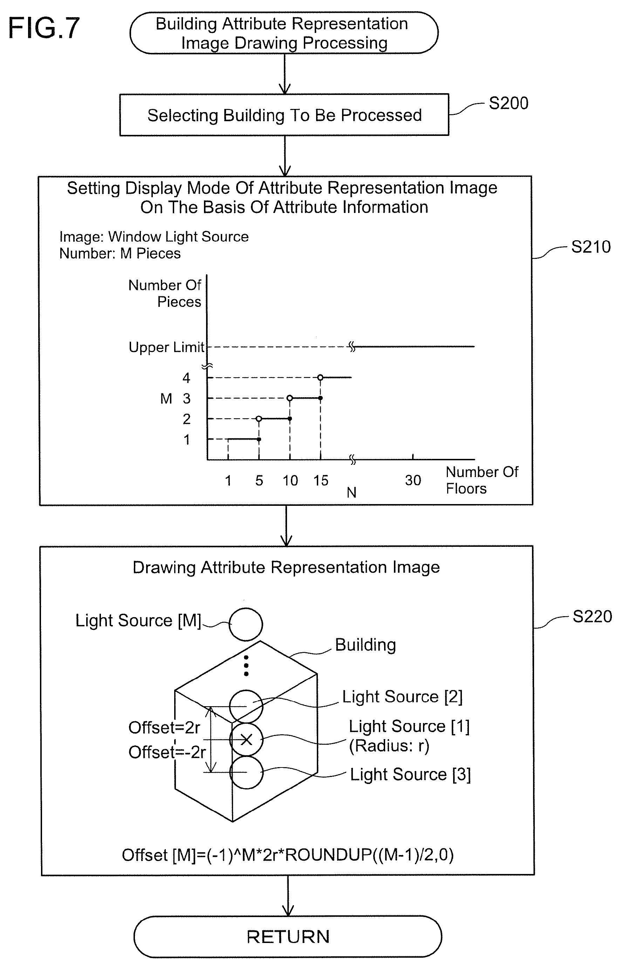

Fig. 7 is a flowchart illustrating a flow of building attribute representation image drawing processing. This processing corresponds to a part of Step S170 (attribute representation image drawing processing) in the 3D map display processing illustrated in Fig. 6 and is sequentially executed for a building present in a display target area if the display mode is the night-view mode.

When the processing is started, the terminal 10 selects a building to be processed (Step S200). Then, the terminal 10 sets a display mode of a window light source image which is the attribute representation image on the basis of the attribute information of the building (Step S210). The terminal 10 sets M pieces of the window light source images to a building with N floors. In this embodiment, as illustrated in a frame at Step S210, the number of window light source images is set in steps such as one for a one-storied to five-storied building, two for a six-storied to ten-storied building, and three for an eleven-storied to fifteen-storied building and moreover, an upper limit value is set to the number of window light source images. The number of the window light source images may be the same as the number of floors of the building but by setting it in steps as above, the number of the window light source images displayed in the map can be prevented from becoming excessive. Moreover, by providing the upper limit value and by keeping the number of images of window light sources to the upper limit value regardless of the number of floors for a building with certain floors or more, the number of window light source images for one feature can be prevented from becoming excessive.

Then, the terminal 10 draws M pieces of the window light source images at corresponding positions (see Step S150 in Fig. 6) of the projection view of the building in the attribute representation image layer (see Fig. 5) (Step S220). In this embodiment, as illustrated in the frame at Step S220, the window light source image is a circular image having a radius r, and if there are a plurality of the window light source images, the terminal 10 draws the window light source images in abutting state in a juxtaposed manner in a height direction of the building. A part of the window light source images may protrude from the shape of the building. A position of a light source [1] uses a display position previously obtained at Step S150 in Fig. 6. The light source [M] which is the M-th window light source image is drawn on the basis of the position of the light source [1] which is the first window light source image with an offset in the vertical direction. The offset amount at this time is calculated by the following equation (1)]

$$\mathtt{Offset\ [M]\ =\ (-1)^{M}\ x\ 2r\ x\ ROUNDUP((M-1)/2,\ 0)\dots\ (1)}$$

where "ROUNDUP (X, 0) is a function for rounding up to the first decimal place of a numeral value X.

Moreover, though not shown, the terminal 10 draws the light source image of the aircraft warning light at a position corresponding to a corner of a rooftop of the building, for example, if the light source image of an aircraft warning light is set with respect to the building to be processed.

By means of the processing above, the terminal 10 finishes the building attribute representation image drawing processing.

Arrangement of the light source images can take various modes other than the above. The light sources may be spaced away from each other or in the case of a predetermined number or more of the light sources, they may be separated into two rows or more and displayed. Depending on the position where the light source [1] is displayed, the light sources [M] may be sequentially arrayed in an upper direction or a lower direction from the light source [1] and displayed. The light sources may be arranged at random in a region around the display position of the light source [1].

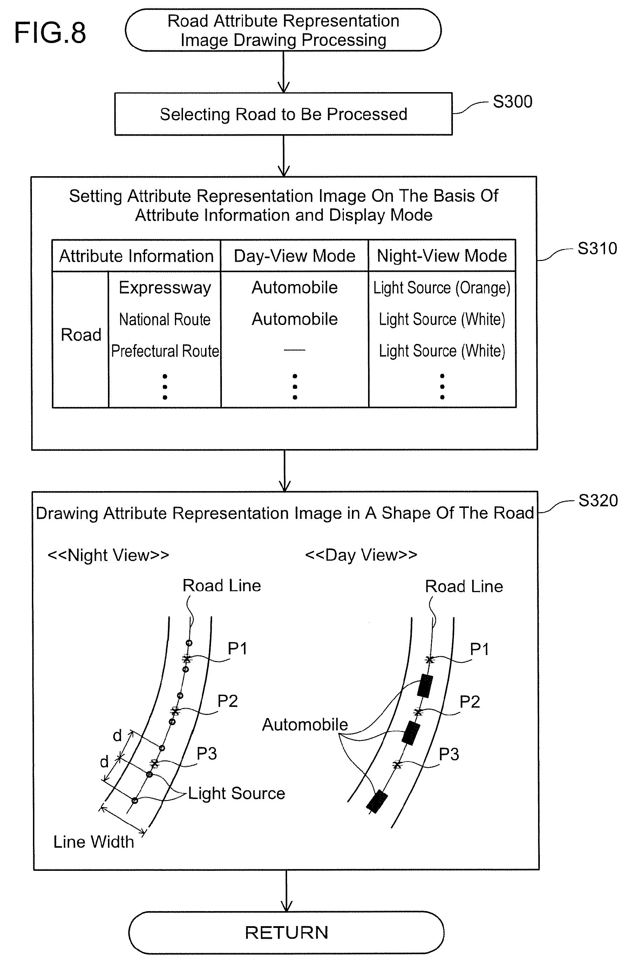

Fig. 8 is a flowchart illustrating a flow of the road attribute representation image drawing processing. This processing corresponds to a part of Step S170 (attribute representation image drawing processing) in the 3D map display processing illustrated in Fig. 6 and is executed sequentially for the road present within a display target area.

When the processing is started, the terminal 10 selects a road to be processed (Step S300). Then, the terminal 10 sets the attribute representation image to be drawn (Step S310) on the basis of the attribute information and the display mode of the road. As illustrated in the frame at Step S310, if the road to be processed is a highway, and if the display mode is the day-view mode, for example, the terminal 10 selects an image of an automobile as the attribute representation image. If the road to be processed is a highway, and if the display mode is the night-view mode, for example, the terminal 10 selects the light source image in orange representing a streetlamp as the attribute representation image.

Then, the terminal 10 draws the selected attribute representation image in a shape of the road in the attribute representation image layer (see Fig. 5) (Step S320).

As illustrated on the left side in the frame at Step S320, if the display mode is the night-view mode, the terminal 10 draws the plurality of light source images representing the light of the streetlamps along the road so as to be apparently arranged at equal intervals. In this embodiment, the road is assumed to be drawn not as a polygon but by a line with a line width. Thus, the terminal 10 obtains coordinates of passage points P1, P2, and P3 of line data after projection as display positions when the road is rendered (see Step S150 in Fig. 6). Then, in the processing at Step S320, the line of the road on the attribute representation image layer is acquired on the basis of the coordinates of these passage points P1 to P3, and the light source images are arranged at predetermined intervals d along this line. The interval d can be set arbitrarily on the basis of a scale of map display and the like. In the perspective-projected image, considering the fact that the scale of the distance is reduced on the upper part, that is, in the long-range view, the interval d may be made sequentially shorter as it goes to the upper part.

At this time, the terminal 10 changes an array of the light source images in accordance with the type of the road and the number of lanes. For a high way with many lanes, for example, the terminal 10 arrays the light source images in two rows, while for a narrow street with fewer lanes, the terminal 10 arrays the light source images in one row. When the light source images are displayed in two rows or more, it is only necessary to arrange the light source images at positions offset from the road line in a width direction of the road. The offset amount at this time is preferably set on the basis of the line width of the road so as not to be largely deviated from the road, but it does not necessarily have to be contained in the road. By representing the light sources in such a mode, the light sources can be drawn under the constraint condition of arrangement along the road line.

If the display mode is the day-view mode, as illustrated on the right side in the frame at Step S320, the terminal 10 performs drawing so that the image of the automobile is arranged at random on the road. A method of specifying the road line is similar to the case of the night-view mode. Regarding an arrangement position of the image of the automobile, the position on the road line may be determined by using random numbers or the interval between the automobiles may be determined by using random numbers. When the images of the automobiles are displayed, they may be changed to two rows or more in accordance with the type of the road or the number of lanes. However, in the case of the image of the automobile, the constraint condition is stricter than the light source, and the offset amount needs to be determined so as not to protrude from the line width of the road.

By means of the processing above, the terminal 10 finishes the road attribute representation image drawing processing.

The attribute representation image drawing processing for the features other than the building and the road is substantially the same as the aforementioned road attribute representation image drawing processing. That is, the terminal 10 selects the feature to be processed, sets the attribute representation image to be drawn on the basis of the attribute information and the display mode, and draws the attribute representation image at the position corresponding to the projection view in the attribute representation image layer. However, the terminal 10 switches the condition on the drawing position of the attribute representation image in accordance with whether the attribute representation image is an image physically associated with the feature or an image not physically associated with the feature.

The attribute representation images not physically associated with the feature include an image representing sea spray on a coastline, for example. In this case, the terminal 10 allows white points, lines and the like representing the sea spray with respect to a polygon representing the sea at random and protruding from the boundary of the polygon in the vicinity of the coast line. Moreover, the attribute representation images physically associated with the feature include images representing a ship floating on the sea, plants growing on the fields and mountains, for example. In this case, the terminal 10 performs drawing of the attribute representation images under the condition that the image does not protrude from the polygon representing the feature and the condition that the image is on the boundary or within a predetermined distance range from the boundary, for example.

As described above, by switching the condition on the drawing position of the attribute representation image in accordance with the feature, diversified attribute representation images can be displayed for various features, and reality of the 3D map can be improved.

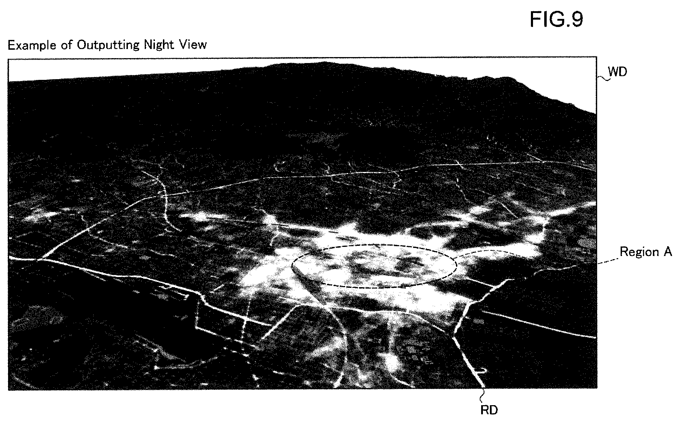

Fig. 9 is an explanatory view illustrating a display example of a 3D map (bird's eye view) when the display mode is the night-view mode. This 3D map is made by the aforementioned 3D map display processing (night-view mode). In an actual map, the sky is drawn in navy blue but in Fig. 9, in order to clearly represent the boundary between the sky and the mountain, the sky is drawn in white. Moreover, characters in the map are omitted.

On a display screen WD of the display device 30, as illustrated, the light source images representing light leaking through the windows of the building and the like are displayed in a concentrated manner in the vicinity of a region A indicated by surrounding with a broken line, and the night view of a city in which a large number of buildings stand is represented with reality. Moreover, on the display screen WD, the light source images representing light of the streetlamps on the road and the like are displayed linearly, and the night view of the plurality of roads such as a road RD and the like is represented with reality.

According to the navigation system of this embodiment described above, by displaying the attribute representation image superposed on the projection view in the 3D map, the appearance attribute of a feature can be represented spuriously and simply. Therefore, reality of the 3D map can be improved with a relatively light load.

F. Variation:

Some embodiments of the present invention have been described above, but the present invention is not limited to these embodiments but is capable of practice in various modes within a range not departing from the gist thereof. Variations as follows are possible, for example.

F1. Variation 1:

In the embodiment, if the display mode of the 3D map is the night-view mode, the light source images (window light source images) in the number according to the number of floors of the building are arranged, but the present invention is not limited to that.

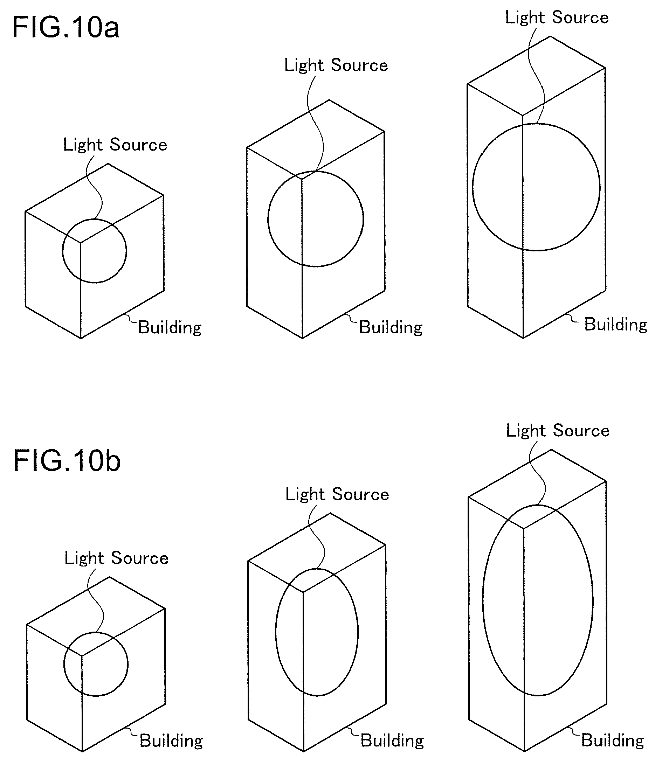

Fig. 10 is an explanatory view illustrating display modes of a light source image of a variation. As illustrated in Fig. 10a, the higher the building is, the larger the size of the circular light source image may be made. Moreover, as illustrated in Fig. 10b, the higher the building is, the light source image may be deformed to a vertically long oval. By means of such a display mode, to, the height of the building can be represented spuriously.

F2. Variation 2:

In the embodiment, in the road attribute representation image drawing processing, the light source image representing the light of the streetlamp is drawn in the shape of the road in the attribute representation image layer, but the present invention is not limited to that.

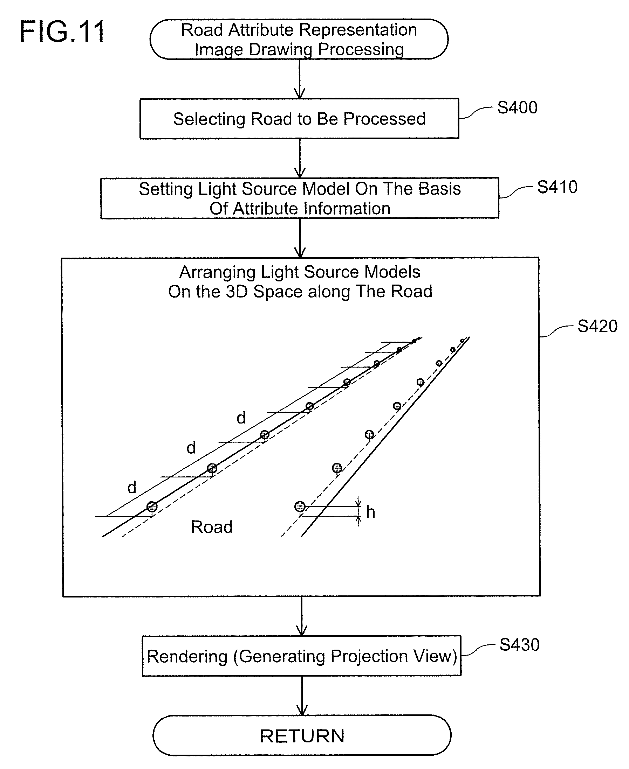

Fig. 11 is a flowchart illustrating a flow of the road attribute representation image drawing processing of a variation. This processing is executed sequentially for the road present in the display target area immediately after Step S130 in Fig. 6 if the display mode of the 3D map is the night-view mode.

When the processing is started, the terminal 10 selects the road to be processed (Step S400). Then, the terminal 10 sets a spherical light source model for displaying the light source image as the attribute representation image representing the light of the streetlamp on the basis of the attribute information of the road (Step S410) . If the road to be processed is a highway, the terminal 10 sets the spherical model in orange. If the road to be processed is a national route or a prefectural route, the terminal 10 sets a spherical model in white. A diameter of the spherical model can be set arbitrarily within the road width, for example, and it can be 1/10 of the road width, for example.

Then, the terminal 10 arranges the set light source models on the 3D space along the road (Step S420) . In this embodiment, as illustrated in the frame at Step S420, spherical light source models are arranged at the equal intervals d along the road at positions at a height h from the road.

Then, the terminal 10 renders the light source model and the 3D model of the feature by the perspective projection method on the basis of the view point position and the line of sight direction set at Step S100 in Fig. 6 and generates a projection view displayed with the light source image superposed (Step S430).

By means of the processing above, the terminal 10 finishes the road attribute representation image drawing processing.

According to the road attribute representation image drawing processing of this variation, since perspective projection is made to the light source model representing the light of the streetlamp, perspective similar to the 3D model of the feature can be given to the light source image representing the light of the streetlamp.

F3. Variation 3:

In the embodiment, in the 3D map display processing, the attribute representation image is drawn on the attribute representation image layer and this is superposed on the projection view, but the present invention is not limited to that.

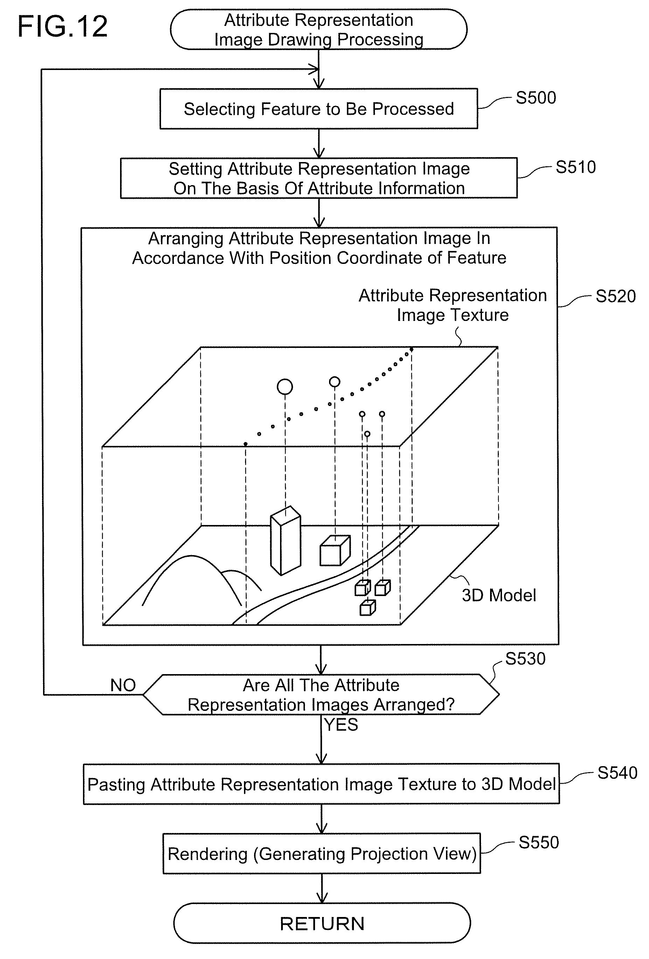

Fig. 12 is a flowchart illustrating a flow of the attribute representation image drawing processing of a variation. This processing is executed immediately after Step S130 in Fig. 6 if the display mode of the 3D map is the night-view mode.

When the processing is started, the terminal 10 selects the feature to be processed (Step S500). Then, the terminal 10 sets the corresponding attribute representation image (light source image) on the basis of the attribute information of the feature (Step S510). Then, the terminal 10 arranges the attribute representation images on one plane in accordance with the position coordinate of the feature (Step S520). This state is schematically illustrated in the frame at Step S520. In the illustrated example, for the building, the terminal 10 arranges a circular light source image in a size according to a height of the building at a position corresponding to the position coordinate of the building. Moreover, for the road, the terminal 10 arranges the circular light source images representing the light of the streetlamps along the road at equal intervals at positions corresponding to the position coordinate of the road. The one in which the attribute representation images of a plurality of features are arranged on one plane is called an attribute representation image texture.

Then, the terminal 10 determines whether or not all the attribute representation images have been arranged for all the features to be processed (Step S530). If all the attribute representation images are not arranged yet (Step S530: NO), the terminal 10 returns the processing to Step S500. On the other hand, if all the attribute representation images have been arranged (Step S530: YES), the terminal 10 pastes the attribute representation image texture to the 3D model (Step S540).

Then, the terminal 10 renders the 3D model by the perspective projection method on the basis of the view point position and the line of sight direction set at Step S100 in Fig. 6 and generates a projection view displayed with the light source image superposed (Step S550).

By means of the processing above, the terminal 10 finishes the attribute representation image drawing processing.

F4. Variation 4:

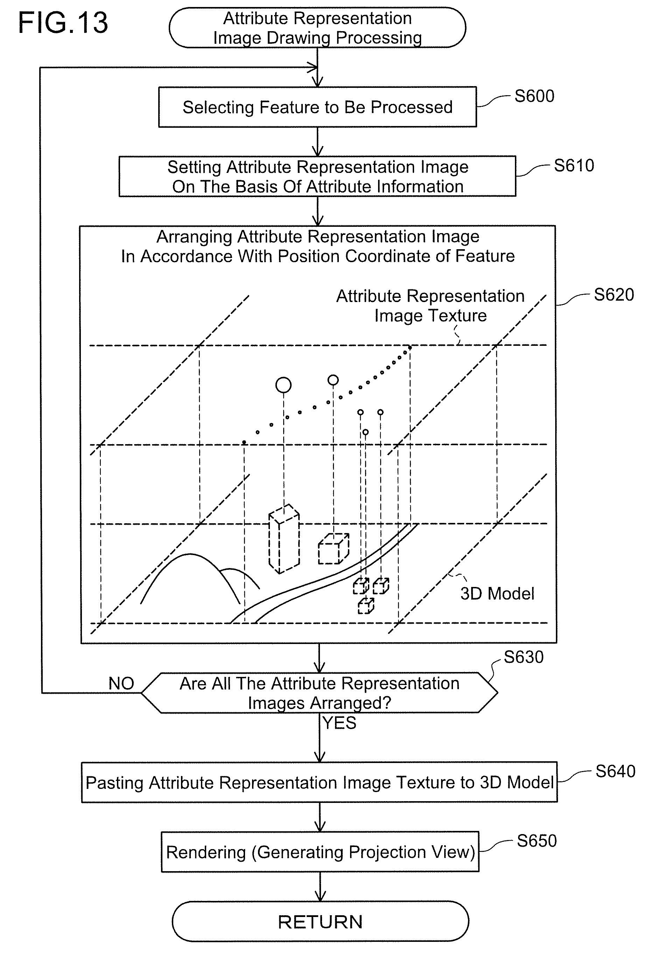

Fig. 13 is a flowchart illustrating a flow of the attribute representation image drawing processing of another variation. The attribute representation image drawing processing of this variation is processing when a wide area view of such a degree that individual buildings cannot be visually recognized is displayed. The flow of the attribute representation image drawing processing of this variation is substantially the same as the attribute representation image drawing processing of the variation illustrated in Fig. 12. This processing is also executed immediately after Step S130 in Fig. 6 when the display mode of the 3D map is the night-view mode.

When the processing is started, the terminal 10 selects a feature to be processed (Step S600). Then, the terminal 10 sets the corresponding attribute representation image (light source image) on the basis of the attribute information of the feature (Step S610). Then, the terminal 10 arranges the attribute representation images on one plane in accordance with the position coordinate of the feature (Step S620). This state is schematically illustrated in the frame at Step S620. In the illustrated example, for the building, the terminal 10 arranges a circular light source image in a size according to a height of the building at a position corresponding to the position coordinate of the building. Moreover, for the road, the terminal 10 arranges the circular light source images representing the light of the streetlamps along the road at equal intervals at positions corresponding to the position coordinate of the road. The 3D model of the building is drawn by a broken line in this drawing in order to indicate that the 3D model is not rendered for the building.

Then, the terminal 10 determines whether or not all the attribute representation images have been arranged for all the features to be processed (Step S630). If all the attribute representation images are not arranged yet (Step S630: NO), the terminal 10 returns the processing to Step S600. On the other hand, if all the attribute representation images have been arranged (Step S630: YES), the terminal 10 pastes the attribute representation image texture to the 3D model (Step S640). At this time, the terminal 10 pastes the attribute representation image after the 3D model of the building is removed.

Then, the terminal 10 renders the 3D model of those other than the building by the perspective projection method on the basis of the view point position and the line of sight direction set at Step S100 of Fig. 6 and generates a projection view displayed with the light source image superposed (Step S650). In this projection view, the 3D model of the building is not projected, but a light source image corresponding to the building is projected.

By means of the processing above, the terminal 10 finishes the attribute representation image drawing processing.

F5. Variation 5:

The various processing described in the embodiment and the variations do not have to be provided with all but a part of them may be omitted or replaced by other processing.

F6. Variation 6:

In the embodiment, the example in which the 3D map display system of the present invention is applied to the navigation system is illustrated, but regardless of the route search/route guidance function, it can be constituted as a device for displaying a 3D map.

F7. Variation 7:

In the embodiment, the processing executed in a software manner may be executed in a hardware manner or vice versa.

[Industrial Applicability]

The present invention can be used for technologies for displaying a 3D map representing a feature three-dimensionally.

[Reference Numerals]

| | |
|---|---|
| 10 | Terminal |
| 11 | Command Input Unit |
| 12 | Transmission/Reception Unit |
| 13 | Display Control Unit |
| 14 | Projection View Generation Unit |
| 15 | Attribute Representation Image Superposing Unit |
| 16 | Character Display Control Unit |

17 Data Holding Unit
18 Positional Information Obtaining Unit
20 Map Database
22 Map Data
24 Attribute Representation Image Data
24T Setting Table
26 Character Data
29 Network Data
100 Server
101 Transmission/Reception Unit
102 Database Management Unit
103 Route Search Unit
NE Network

**Claims**

1. A 3D map display system for displaying a 3D map on which a feature is represented three-dimensionally, comprising:

   a map database for storing, in associated manner, drawing data including a 3D model of the feature and appearance attribute information representing an appearance attribute of the feature;
   a projection view generation unit for generating a projection view made by projecting the drawing data; and
   an attribute representation image superposing unit for displaying an attribute representation image superposed on the projection view on the basis of the appearance attribute information, the attribute representation image being an image representing the appearance according to the appearance attribute information without depending on a shape of the feature,.

2. The 3D map display system according to claim 1, wherein
   the attribute representation image is an image representing an appearance without physical association with the feature; and
   the attribute representation image superposing unit displays the attribute representation image by allowing protrusion from a shape of the feature.

3. The 3D map display system according to claim 1 or 2, wherein
   the attribute representation image is a 2D image; and
   the attribute representation image superposing unit displays the attribute representation image superposed on the projection view generated by the projection view generation unit.

4. The 3D map display system according to any one of claims 1 to 3, wherein
   the feature is a building;
   the appearance attribute information is information representing a light emission state at night of the building;
   the attribute representation image is a light source image representing light emission at night of the building; and
   the attribute representation image superposing unit displays the attribute representation image in accordance with the light emission state.

5. The 3D map display system according to claim 4, wherein
   the appearance attribute information includes information representing a height or a the number of floors of the building; and
   the attribute representation image superposing unit displays the attribute representation image in the number or size according to the height or the number of floors of the building.

6. The 3D map display system according to claim 1, wherein
   the attribute representation image is an image representing an appearance of an object physically associated with the feature; and
   the attribute representation image superposing unit displays the attribute representation image under a constraint condition based on the shape of the feature.

7. The 3D map display system according to claim 6, wherein

the attribute representation image superposing unit arranges a model for displaying the attribute representation image on the 3D model prior to generation of the projection view.

8. The 3D map display system according to claim 6 or 7, wherein
the feature is a road;
the attribute representation image is a light source image representing light of a streetlamp arranged on the road; and
the attribute representation image superposing unit displays the light source image under a constraint condition that the image is along the road.

9. A 3D map display method for displaying a 3D map on which a feature is represented three-dimensionally by a computer, comprising:

a map database referring step in which the computer refers to a map database storing, in an associated manner, drawing data including a 3D model of the feature and appearance attribute information representing an appearance attribute of the feature;
a projection view generating step in which the computer generates a projection view obtained by projecting the drawing data; and
an attribute representation image superposing step in which the computer superposes an attribute representation image on the projection view for display on the basis of the appearance attribute information, the attribute representation image being an image representing an appearance according to the appearance attribute information not depending on a shape of the feature.

10. A computer-readable recording medium recording a computer program for displaying a 3D map on which a feature is represented three-dimensionally by a computer, the computer program being for causing the computer to realize:

a map database referring function of referring to a map database storing, in an associated manner, drawing data including a 3D model of the feature and appearance attribute information representing an appearance attribute of the feature;
a projection view generating function of generating a projection view obtained by projecting the drawing data; and
an attribute representation image superposing function of superposing an attribute representation image on the projection view for display on the basis of the appearance attribute information, the attribute representation image being an image representing an appearance according to the appearance attribute information not depending on a shape of the feature.

FIG.1

# FIG.2a  Map Data

Feature ID — Type

— Name

— 3D Model

— Texture

— Attribute

22

# FIG.2b  Type: Building

— Attribute — Detailed Type (ex. Office Building)

— Height, Number of Floors

22

# FIG.2c  Type: Road

— Attribute — Detailed Type (ex. Expressway)

— Number Of Lane

22

| Type/Detailed Type | | Day-View Mode | Night-View Mode |
|---|---|---|---|
| Road | Expressway | ID1 | Light Source (Orange) |
| | National Route | ID1 | Light Source (White) |
| | Prefectural Route | — | Light Source (White) |
| | ⋮ | ⋮ | ⋮ |
| Railway | | ID2 | — |
| Building | High Rise Building | — | Window Light Source, Aircraft Warning Light |
| | Office Building | — | Window Light Source |
| | Residential Building | — | Window Light Source |
| | ⋮ | ⋮ | ⋮ |
| Sea | Port | ID3 | Ship Light Source |
| | — | Wave Light Source White Point | — |
| Mountains And Forests | Conifer Forest | ID4 | — |
| | Broadleaf Forest | ID5 | — |
| ⋮ | ⋮ | ⋮ | ⋮ |

24T

| ID | Attribute Representation Image Data |
|---|---|
| ID1 | Automobile |
| ID2 | Train |
| ID3 | Ship |
| ID4 | Conifer |
| ID5 | Broadleaf |
| ⋮ | ⋮ |

24

FIG.3

EP 3 009 988 A1

FIG.4

```
          ┌─────────────────────────┐
          │     Route Guidance       │
          │       Processing         │
          └─────────────────────────┘
                      │
                      ▼
      ┌─────────────────────────────────┐
      │   Inputting Departure Place,     │──S10
      │  Destination Place, Display Mode │
      └─────────────────────────────────┘
                      │
                      ▼
          ┌─────────────────────┐
          │   Route Search       │──S12
          │    Processing        │
          └─────────────────────┘
                      │
                      ▼
          ┌─────────────────────┐
          │    Inputting         │──S14
          │  Current Position    │
          └─────────────────────┘
                      │
                      ▼
      ┌─────────────────────────────────┐
      │ Determining View Point Position, │──S16
      │      Line of Sight Direction     │
      └─────────────────────────────────┘
                      │
                      ▼
      ┌─────────────────────────────────┐
      │   3D Map Display Processing      │──S18
      └─────────────────────────────────┘
                      │
                      ▼           S20
              ◇─────────────────◇
        NO    │ Destination Place? │
      ◄───────◇─────────────────◇
                      │ YES
                      ▼
              ┌──────────────┐
              │     END      │
              └──────────────┘
```

20

FIG.5

3D Model

Long-Range
View

Projection View

Attribute
Representation
Image Layer

Reduction

Short-Range
View

FIG.6

```
        ( 3D Map Display Processing )
                    │
                    ▼
┌────────────────────────────────────┐
│        Inputting View Point Position,      │──── S100
│    Line of Sight Direction, Display Mode    │
└────────────────────────────────────┘
                    │
                    ▼
┌────────────────────────────────────┐
│            Reading 3D Model,              │──── S110
│    Attribute Representation Image Data     │
└────────────────────────────────────┘
                    │
                    ▼  ┌─ S120
            ◇─────────────────◇
      NO   <   Night-View Mode?   >
   ┌───────◇─────────────────◇
   │              │ YES
   │              ▼
   │      ┌──────────────────┐
   │      │  Darkening Entirely  │──── S130
   │      └──────────────────┘
   │              │
   └──────────────┤
                  ▼
┌────────────────────────────────────┐
│   Rendering (Generating Projection View)   │──── S140
└────────────────────────────────────┘
                  │
                  ▼
┌────────────────────────────────────┐
│         Setting Display Position of        │──── S150
│      Attribute Representation Image        │
└────────────────────────────────────┘
                  │
                  ▼
┌────────────────────────────────────┐
│ Expanding/Contracting Size of Attribute Representation │──── S160
│   Image In Accordance With Display Position │
└────────────────────────────────────┘
                  │
                  ▼
┌────────────────────────────────────┐
│       Attribute Representation             │──── S170
│      Image Drawing Processing              │
└────────────────────────────────────┘
                  │
                  ▼
┌────────────────────────────────────┐
│        Displaying Character in             │──── S180
│          Superposed Manner                 │
└────────────────────────────────────┘
                  │
                  ▼
            (    RETURN    )
```

**FIG.7**

( Building Attribute Representation
Image Drawing Processing )

↓

Selecting Building To Be Processed — S200

↓

Setting Display Mode Of Attribute Representation Image
On The Basis Of Attribute Information — S210

Image: Window Light Source
Number: M Pieces

Number Of
Pieces

Upper Limit

M 4 3 2 1

1 5 10 15   30   Number Of Floors
N

↓

Drawing Attribute Representation Image — S220

Light Source [M]

⋮

Building

Light Source [2]

Offset=2r
Offset=-2r

Light Source [1]
(Radius: r)

Light Source [3]

Offset [M]=(-1)^M*2r*ROUNDUP((M-1)/2,0)

↓

( RETURN )

FIG.8 Road Attribute Representation Image Drawing Processing

Selecting Road to Be Processed — S300

Setting Attribute Representation Image On The Basis Of Attribute Information and Display Mode — S310

| Attribute Information | | Day-View Mode | Night-View Mode |
|---|---|---|---|
| Road | Expressway | Automobile | Light Source (Orange) |
| | National Route | Automobile | Light Source (White) |
| | Prefectural Route | — | Light Source (White) |
| | ⋮ | ⋮ | ⋮ |

Drawing Attribute Representation Image in A Shape Of The Road — S320

<<Night View>>

Road Line

P1

P2

d
d P3

Light Source

Line Width

<<Day View>>

Road Line

P1

P2

Automobile

P3

RETURN

FIG.9

Example of Outputting Night View

WD

Region A

RD

FIG.10a

Light Source

Light Source

Light Source

Light Source

Building

Building

Building

FIG.10b

Light Source

Light Source

Light Source

Light Source

Building

Building

Building

FIG.11  ( Road Attribute Representation
Image Drawing Processing )

Selecting Road to Be Processed ——— S400

Setting Light Source Model On The Basis
Of Attribute Information ——— S410

Arranging Light Source Models
On the 3D Space along The Road

——— S420

d

d

d

h

Road

Rendering (Generating Projection View) ——— S430

( RETURN )

FIG.12

Attribute Representation
Image Drawing Processing

Selecting Feature to Be Processed —— S500

Setting Attribute Representation Image
On The Basis Of Attribute Information —— S510

Arranging Attribute Representation Image In
Accordance With Position Coordinate of Feature

Attribute Representation
Image Texture —— S520

3D Model

NO — Are All The Attribute
Representation Images Arranged? —— S530

YES

Pasting Attribute Representation Image Texture to 3D Model —— S540

Rendering (Generating Projection View) —— S550

RETURN

# FIG.13

Attribute Representation
Image Drawing Processing

Selecting Feature to Be Processed ⎯ S600

Setting Attribute Representation Image
On The Basis Of Attribute Information ⎯ S610

Arranging Attribute Representation Image
In Accordance With Position Coordinate of Feature

Attribute Representation
Image Texture ⎯ S620

3D Model

NO ⟨ Are All The Attribute Representation
Images Arranged? ⟩ ⎯ S630

YES

Pasting Attribute Representation Image Texture to 3D Model ⎯ S640

Rendering (Generating Projection View) ⎯ S650

RETURN

## INTERNATIONAL SEARCH REPORT

| International application No. |
| --- |
| PCT/JP2014/064661 |

A. CLASSIFICATION OF SUBJECT MATTER
*G06T17/05*(2011.01)i, *G06T15/50*(2011.01)i, *G09B29/00*(2006.01)i

According to International Patent Classification (IPC) or to both national classification and IPC

B. FIELDS SEARCHED

Minimum documentation searched (classification system followed by classification symbols)
G06T17/05, G06T15/50, G09B29/00

Documentation searched other than minimum documentation to the extent that such documents are included in the fields searched
Jitsuyo Shinan Koho          1922–1996     Jitsuyo Shinan Toroku Koho     1996–2014
Kokai Jitsuyo Shinan Koho    1971–2014     Toroku Jitsuyo Shinan Koho     1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2002-267464 A (Alpine Electronics, Inc.), 18 September 2002 (18.09.2002), abstract; paragraphs [0001] to [0009], [0013], [0018] to [0022], [0029] to [0041]; fig. 3, 4 (Family: none) | 1-10 |
| Y | JP 2000-346658 A (Mitsubishi Electric Corp.), 15 December 2000 (15.12.2000), abstract; paragraphs [0060] to [0070]; fig. 12 (Family: none) | 1-10 |
| Y | JP 2005-326154 A (Alpine Electronics, Inc.), 24 November 2005 (24.11.2005), abstract; paragraphs [0032], [0044] to [0049]; fig. 5, 7 & EP 1596163 A2          & US 2005/0261826 A1 | 1-10 |

☒ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 July, 2014 (24.07.14) | 05 August, 2014 (05.08.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/064661

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-298162 A  (Mitsubishi Electric Corp.), 11 October 2002 (11.10.2002), abstract; paragraph [0025]; fig. 2 (Family: none) | 5 |
| Y | JP 2002-287616 A  (Mitsubishi Electric Corp.), 04 October 2002 (04.10.2002), abstract; paragraphs [0044] to [0046], [0060]; fig. 6, 7 (Family: none) | 8 |
| Y | JP 11-232484 A  (Wall Corp.), 27 August 1999 (27.08.1999), abstract; paragraphs [0107], [0191] (Family: none) | 8 |

Form PCT/ISA/210 (continuation of second sheet) (July 2009)

**EP 3 009 988 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002298162 A
- JP 2005326154 A